# EUROPEAN PATENT SPECIFICATION

(11) **EP 0 808 795 B1**
(45) Date of publication and mention of the grant of the patent: **07.08.2002**
(21) Application number: 97201437.7
(22) Date of filing: 13.05.1997
(51) Int. Cl.: B67C 3/26, G01F 11/32, F16K 23/00

(54) **Metering valve**
Dosierventil
Soupape de dosage

(30) Priority: 23.05.1996 NL 1003195
(43) Date of publication of application: 26.11.1997
(73) Proprietor: Gerritse Systems Engineering, 6971 GV Brummen (NL)
(72) Inventor: Ensing, Hendrik, 5941 AJ Velden (NL)
(74) Representative: Hooiveld, Arjen Jan Winfried

(56) References cited:
- EP-A- 0 072 091
- EP-A- 0 490 884
- CH-A- 190 390
- GB-A- 970 396

## Description

The present invention relates to a valve for metering liquids, comprising a chamber, which is delimited by a housing, for accommodating and passing through liquid, a closure member, a portion of which, in the closed position of the valve, closes off an outlet opening of the chamber, which closure member is connected to a pin, which is connected to means for moving the closure member between a position in which the portion of the closure member closes off the outlet opening and a position in which the portion of the closure member is clear of the outlet opening.

Valves of this kind are known in the art and are produced, for example, by the Klieverik company in Oldenzaal, the Netherlands. Valves of the abovementioned type are preferably used when liquids are to be metered with a high degree of accuracy. This is achieved, inter alia, in that a relatively long but very narrow outlet passage is formed in an open position of the valve. However, the problem is that when the valve is being closed the closure member forces the contents of the abovementioned passage outwards; this forced-out liquid leaves the valve with an uncontrolled movement in terms of direction and velocity, which may lead to undesired effects, such as inaccurate metering, due to the fact that the forced-out liquid does not pass into a desired container or only strikes the wall thereof, or due to the fact that this liquid is forced into the container at such a high velocity that as a result material already situated in the container is pushed out of the container. This is particularly disadvantageous if metering is to be carried out very accurately, but also if the liquid tends to adhere to the outlet opening, so that the size of the outlet opening is reduced and may ultimately become blocked.

There is also known from EP-A-0 490 884 a valve assembly comprising a valve stem with proximal auddistal portions, a sealing member being attached to the portion of the stem remote from the closure member.

The object of the present invention is to eliminate the abovementioned problem, and to that end is characterized in that the pin comprises, at a distance from the closure member, a distal pin portion, the outer circumference of which can be made to interact in a sealing manner with a sealing element of the valve, which is liquid-tight connected to the housing, and a proximal pin portion, between the closure member and the distal pin portion, of which interaction in a sealing manner with the sealing element is excluded, which sealing element permits axial movement of the pin through an opening, and the pin's distal portion being so disposed such that, during closure of the valve, it comes into sealing interaction with the sealing element before the abovementioned portion of the closure member closes off the outlet opening.

In a valve of this kind, just before the closure a compartment is formed, which is closed off by the distal pin portion and the sealing element, so that liquid can no longer be supplied; if the movement of the pin continues, the closure member will close off the outlet opening of the valve, in which case a sucking action will arise in the abovementioned outlet passage as a result of the increase in volume in the closed compartment, so that the liquid situated in the said outlet passage is not forced outwards but is drawn into the compartment.

A good closure between the sealing element and the distal pin portion is very important, since a poor closure may limit the sucking action of the valve during closure. Since the liquid may be introduced under pressure into the chamber delimited by the housing, it is preferred that at least the distal pin portion is of cylindrical design and the opening of the sealing element is of correspondingly circular design.

Owing to the reasons mentioned above, it is also important to be able to dispose the sealing element in a liquid-tight manner in the housing. To this end, preferably the housing is of cylindrical design and the outer circumference of the sealing element is of correspondingly circular design. Materials and methods for producing sealing elements of this kind and disposing them in a sealing manner in an abovementioned chamber are otherwise known to the person skilled in the art.

It is known in the art that, for very accurate metering, the flow characteristics of the liquid play an important role; turbulence is to be avoided as far as possible in the valve. To this end, the pin preferably merges from the distal pin portion into the proximal pin portion at least partially via a continuous narrowing, so that turbulence is substantially prevented at this transition. This continuous narrowing may cover the entire circumference of the pin, so that the distal pin portion merges into a proximal pin portion of smaller diameter. However, it is preferable to design the narrowing by means of one or more grooves arranged longitudinally in the pin, through which the liquid can flow during use of the valve, in which case satisfactory centring and guidance of the pin through the sealing element remains ensured.

In order to maintain the laminar flow characteristics of the liquid, the closure member is preferably likewise of continuously narrowed design in the direction of its portion which closes off the outlet opening.

For the purpose of good and accurate metering, the inner circumference of the outlet opening preferably corresponds to at least part of the outer circumference of the closure member, the wall(s) adjoining the outlet opening being of narrowed design in the direction of the outlet opening, in a manner corresponding to the closure member. In this manner, just before the valve is closed, a very narrow outlet passage is formed, which assumes a relatively low volume, so that on the one hand the metering can be carried out very accurately and on the other hand a relatively small volume has to be drawn back into the closed compartment during closure.

Preferably, the outlet opening is of circular design and the closure member and the wall adjoining the outlet opening are of conical or frustoconical design, in order to ensure optimum sealing in the closed position.

The area of the cross-section of the distal pin portion is preferably substantially equal to the area of the outlet opening, since a larger outlet opening will result in extra suction, which is undesirable since the closed compartment will then also be filled with drawn-in ambient medium, for example air, as a result of which the liquid can no longer be accurately metered when the valve is opened again; in the case of an outlet opening which is smaller than the area of the cross-section of the distal pin portion, too little liquid will be drawn back, so that the problem of uncontrolled dispensing during closure of the valve is only partially solved. Therefore, the area of the cross-section of the distal pin portion is preferably equal to the area of the outlet opening.

The invention will be explained in more detail below with reference to the drawing, in which:
Fig. 1 shows a cross-section of a closure valve in accordance with the prior art, in the open (Fig. 1A) and closed (Fig. 1B) position,
Fig. 2 is a diagrammatic cross-section of a valve in accordance with the present invention, in a very simplified form, in the open position (Fig. 2A), in the position in which the compartment is closed (Fig. 2B), and in the closed position (Fig. 2C),
Figs. 2D and 2E show the situation as in Fig. 2B, where the area of the outlet opening of the valve is larger and smaller, respectively, than in Fig. 2B,
Fig. 3 is a cross-section of a simplified preferred embodiment of the valve in accordance with the present invention.

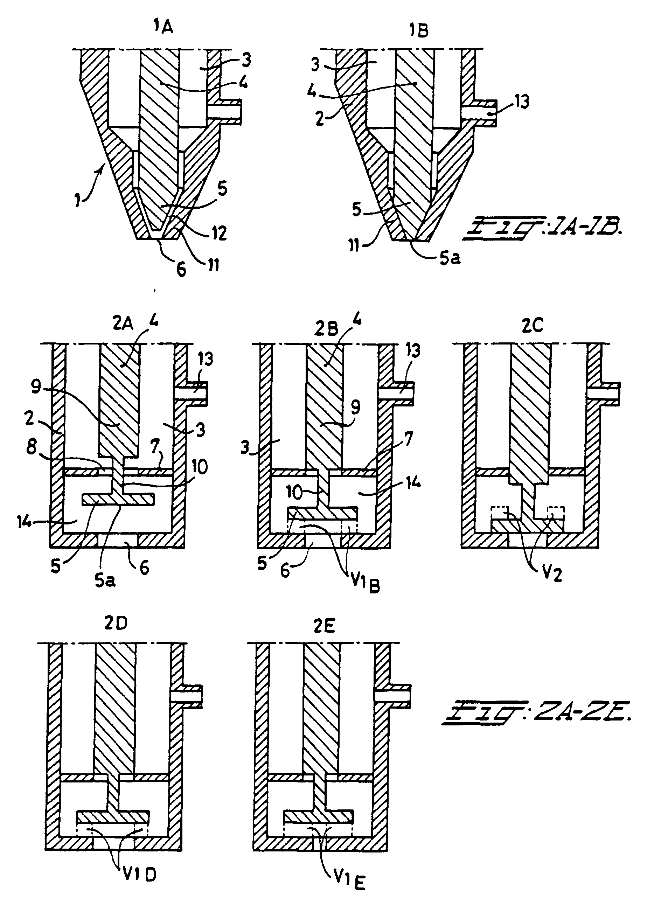

In Fig. 1, 1 is a valve in accordance with the prior art; in the open position (Fig. 1A), closure member 5, which is connected to pin 4, is clear of outlet opening 6, which is delimited by wall 11 of casing 2. In this open position, liquid can flow out of chamber 3, via the passage 12 which is present in the open position, and out through outlet opening 6. In the closed position (Fig. 1B), portion 5a of closure member 5 closes off outlet opening 6. During the closure movement, the liquid which is situated in passage 12 will be forced outwards via outlet opening 6 by the continuous feed of liquid through supply line 13.

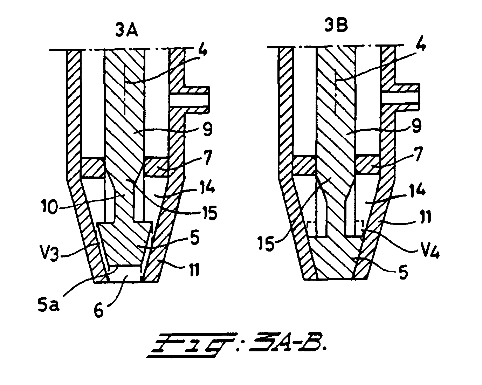

Fig. 2A shows a simplified form of the valve in accordance with the present invention in the open position. Liquid which is situated in chamber 3 flows via opening 8 of sealing element 7 into compartment 14 and the liquid is then dispensed via opening 6. As soon as the pin 4 moves in the direction of outlet opening 6, it will come into interaction with sealing element 7 (Fig. 2B), as a result of which the passage of liquid from chamber 3 to compartment 14 is prevented. However, compartment 14 is in open communication with the environment via outlet opening 6. In the event of continuing axial movement of the pin, closure member 5 will close off outlet opening 6. During the movement of the closure member from the position in Fig. 2B to the position of Fig. 2C, volume V1B will be displaced by closure member 5, specifically to the volume V2, which is simultaneously formed in the compartment 14 and is equal to the volume of V1B, if the area of the outlet opening 6 is equal to the area of the cross-section of the distal pin portion 9. In the event of outlet opening 6 being larger than the area of the cross-section of the distal pin portion 9 (Fig. 2D), V2 is larger than V1D, as a result of which the difference in volume will be compensated for by drawing in ambient medium. In the event that the area of the outlet opening 6 is smaller than the area of the cross-section of the distal pin portion 9, V1E is larger than V2, so that the difference in volume V1E-V2 will be dispensed to the environment via outlet opening 6.

Fig. 3 shows a preferred embodiment of the valve in accordance with the present invention in simplified form, in which the pin 4 comprises a distal pin portion 9 and a proximal pin portion 10 of equal thickness which is locally provided with grooves 15 through which, in the open position of the valve, the liquid can flow into the compartment. In Fig. 3A, the pin 4 is situated in such a position in the valve that the distal pin portion 9 interacts with sealing element 7, so that the liquid which is situated in chamber 3 cannot flow into compartment 14, and in which the frustoconical closure member 5 is still clear of outlet opening 6, outlet passage 12 being present between the closure member 5 and wall 11. If the axial movement of pin 4 in the direction of outlet opening 6 continues, closure member 5 will close off outlet opening 6 (Fig. 3B), volume V3 being displaced and volume V4 being formed. Like the case described in Figs. 2B and 2C, V3 is equal to V4. The liquid which was situated in passage 12 is drawn into the compartment in the manner described above with reference to Fig. 2, so that there is no uncontrolled dispensing of liquid during closure of the valve.

Valves of this kind can be used in many more different forms and designs, depending on the liquid to be metered. Thus, for example, the degree of narrowing of closure member 5 and of wall 11, the dimensions of the outlet opening 6 and of the area of the cross-section of the distal pin portion, the volume of the compartment, the dimensions of the grooves in the proximal pin portion, etc., can be adapted in accordance with the properties and application of the liquid.

Depending on the materials selected and on the design, valves in accordance with the present invention can be used for a wide variety of liquids, such as for example for liquid solutions of dyes, thickened printing pastes, perfumes and flavourings, fuels and the like.

## Claims

1. Valve (1) for metering liquids, comprising a chamber (3), which is delimited by a housing (2), for accommodating and passing through liquid, a closure member (5), a portion (5a) of which, in the closed position of the valve, closes off an outlet opening (6) of the chamber (3), which closure member (5) is connected to a pin (4), which is connected to means for moving the closure member (5) between a position in which the portion (5a) of the closure member (5) closes off the outlet opening (6) and a position in which the portion (5a) of the closure member (5) is clear of the outlet opening (6), **characterized in that** the pin (4) comprises, at a distance from the closure member (5), a distal pin portion (9), the outer circumference of which can be made to interact in a sealing manner with a sealing element (7) constituting a component of the valve (1), which is liquid-tight connected to the housing (2), and a proximal pin portion (10), between the closure member (5) and the distal pin portion (9), of which interaction in a sealing manner with the sealing element (7) is excluded, which sealing element (7) permits axial movement of the pin (4) through an opening (8), the pin's (4) distal pin portion (9) being so disposed such that, during closure of the valve, it comes into sealing interaction with the sealing element (7) before the portion (5a) of the closure member (5) closes off the outlet opening (6).

2. Valve according to claim 1, **characterized in that** at least the distal pin portion (9) is of cylindrical design and the opening (8) of the sealing element (7) is of correspondingly circular design.

3. Valve according to one of the preceding claims, **characterized in that** the housing (2) is of cylindrical design and the outer circumference of the sealing element (7) is of correspondingly circular design.

4. Valve according to one of the preceding claims, **characterized in that** the pin's (4) distal pin portion (9) merges into the proximal pin portion (10) at least partially via a continuous narrowing member.

5. Valve according to one of the preceding claims, **characterized in that** the closure member (5) is of continuously narrowed design in the direction of the portion (5a) which closes off the outlet opening (6).

6. Valve according to one of the preceding claims, **characterized in that** the inner circumference of the outlet opening (6) corresponds to at least part of the outer circumference of the closure member (5), the wall(s) (11) adjoining the outlet opening (6) being of narrowed design in the direction of the outlet opening, in a manner corresponding to the closure member.

7. Valve according to claim 6, **characterized in that** the outlet opening (6) is of circular design and the closure member (5) and the wall (11) adjoining the outlet opening (6) are of conical or frustoconical design.

8. Valve according to one of the preceding claims, **characterized in that** the area of the cross-section of the distal pin portion (9) is substantially equal to the area of the outlet opening (6).

## Patentansprüche

1. Ventil (1) zum Dosieren von Flüssigkeiten, umfassend eine Kammer (3), die durch ein Gehäuse (2) begrenzt ist, zum Aufnehmen und Hindurchleiten von Flüssigkeit, ein Verschlußteil (5), von dem ein Abschnitt (5a), in der geschlossenen Stellung des Ventils, eine Auslaßöffnung (6) der Kammer (3) verschließt, wobei das Verschlußteil (5) mit einem Stift (4) verbunden ist, der mit Mitteln zum Bewegen des Verschlußteiles (5) zwischen einer Stellung, in der der Abschnitt (5a) des Verschlußteiles (5) die Auslaßöffnung (6) verschließt, und einer Stellung, in der der Abschnitt (5a) des Verschlußteiles (5) die Auslaßöffnung (6) freiläßt, verbunden ist, **dadurch gekennzeichnet, daß** der Stift (4), in einem Abstand vom Verschlußteil (5), einen distalen Stiftabschnitt (9) umfaßt, dessen Außenumfang so ausgestaltet sein kann, daß er in einer abdichtenden Weise mit einem eine Komponente des Ventiles (1) darstellenden Dichtungselement (7) in Wechselwirkung steht, das flüssigkeitsdicht mit dem Gehäuse (2) verbunden ist, und einen proximalen Stiftabschnitt (10) zwischen dem Verschlußteil (5) und dem distalen Stiftabschnitt (9), bei dem Wechselwirkung in einer abdichtenden Weise mit dem Dichtungselement (7) ausgeschlossen ist, wobei das Dichtungselement (7) axiale Bewegung des Stiftes (4) durch eine Öffnung (8) ermöglicht, wobei der distale Stiftabschnitt (9) des Stiftes (4) so angeordnet ist, daß er, während des Verschlusses des Ventiles, in abdichtende Wechselwirkung mit dem Dichtungselement (7) kommt, bevor der Abschnitt (5a) des Verschlußteiles (5) die Auslaßöffnung (6) verschließt.

2. Ventil nach Anspruch 1, **dadurch gekennzeichnet, daß** wenigstens der distale Stiftabschnitt (9) zylindrische Gestalt besitzt und die Öffnung (8) des Dichtungselementes (7) entsprechend kreisförmige Gestalt besitzt.

3. Ventil nach einem der vorangehenden Ansprüche, **dadurch gekennzeichnet, daß** das Gehäuse (2) zylindrische Gestalt besitzt und der Außenumfang des Dichtungselementes (7) entsprechend kreisförmige Gestalt besitzt.

4. Ventil nach einem der vorangehenden Ansprüche, **dadurch gekennzeichnet, daß** der distale Stiftabschnitt (9) des Stiftes (4) in den proximalen Stiftabschnitt (10) wenigstens teilweise über ein sich kontinuierlich verengendes Teil übergeht.

5. Ventil nach einem der vorangehenden Ansprüche, **dadurch gekennzeichnet, daß** das Verschlußteil (5) eine sich kontinuierlich verengende Gestalt in Richtung auf den Abschnitt (5a), der die Auslaßöffnung (6) verschließt, besitzt.

6. Ventil nach einem der vorangehenden Ansprüche, **dadurch gekennzeichnet, daß** der Innenumfang der Auslaßöffnung (6) wenigstens einem Teil des Außenumfanges des Verschlußteiles (5) entspricht, wobei die Wand (Wände) (11), die an die Auslaßöffnung (6) angrenzen, verengte Gestalt in der Richtung der Auslaßöffnung besitzt (besitzen), in einer dem Verschlußteil entsprechenden Weise.

7. Ventil nach Anspruch 6, **dadurch gekennzeichnet, daß** die Auslaßöffnung (6) kreisförmige Gestalt besitzt und das Verschlußteil (5) und die Wand (11), die an die Auslaßöffnung (6) angrenzt, Kegel- oder Stumpfkegelgestalt besitzt.

8. Ventil nach einem der vorangehenden Ansprüche, **dadurch gekennzeichnet, daß** die Fläche des Querschnittes des distalen Stiftabschnittes (9) im wesentlichen der Fläche der Auslaßöffnung (6) entspricht.

## Revendications

1. Soupape (1) de dosage de liquides, comprenant une chambre (3), qui est délimitée par un boîtier (2), destinée à recevoir et laisser passer un liquide, un organe de fermeture (5), dont une partie (5a), dans la position de fermeture de la soupape, obture une ouverture de sortie (6) de la chambre (3), lequel organe de fermeture (5) est relié à une tige (4), qui est reliée à des moyens pour déplacer l'organe de fermeture (5) entre une position dans laquelle la partie (5a) de l'organe de fermeture (5) obture l'ouverture de sortie (6) et une position dans laquelle la partie (5a) de l'organe de fermeture est séparée de l'ouverture de sortie (6), **caractérisée en ce que** la tige (4) comprend, à une certaine distance de l'organe de fermeture (5), une partie distale de tige (9), dont la circonférence extérieure peut être conçue de façon à interagir en étanchéité avec un élément d'étanchéité (7) constituant un composant de la soupape (1), qui est relié de façon étanche au liquide avec le boîtier (2), et une partie de tige proximale (10), entre l'organe de fermeture (5) et la partie distale de tige (9), dont une interaction d'étanchéité avec l'élément d'étanchéité (7) est exclue, lequel élément d'étanchéité (7) permet un mouvement de déplacement axial de la tige (4) à travers une ouverture (8), la partie distale de tige (9) étant ainsi disposée que, lors de la fermeture de la soupape, elle vienne en interaction d'étanchéité avec l'élément d'étanchéité (7) avant que la partie (5a) de l'organe de fermeture (5) ne vienne obturer l'ouverture de sortie (6).

2. Soupape selon la revendication 1, **caractérisée en ce qu'**au moins la partie distale (9) de la tige est de forme cylindrique et l'ouverture (8) de l'élément d'étanchéité (7) a une forme circulaire correspondante.

3. Soupape selon l'une des revendications précédentes, **caractérisée en ce que** le boîtier (2) est de forme cylindrique et la circonférence extérieure de l'élément d'étanchéité (7) a une forme circulaire correspondante.

4. Soupape selon l'une des revendications précédentes, **caractérisée en ce que** la partie distale (9) de la tige (4) se prolonge pour former la partie proximale (10) de la tige au moins en partie par l'intermédiaire d'un organe de rétrécissement continu.

5. Soupape selon l'une des revendications précédentes, **caractérisée en ce que** l'organe de fermeture (5) a une forme qui se rétrécit de façon continue dans la direction de la partie (5a) qui obture l'ouverture de sortie (6).

6. Soupape selon l'une des revendications précédentes, **caractérisée en ce que** la circonférence intérieure de l'ouverture de sortie (6) correspond à au moins une partie de la circonférence extérieure de l'organe de fermeture (5), la ou les paroi(s) (11) adjacente(s) à l'ouverture de sortie (6) ayant une forme rétrécie dans la direction de l'ouverture de sortie, de façon à correspondre à l'organe de fermeture.

7. Soupape selon la revendication 6, **caractérisée en ce que** l'ouverture de sortie (6) a une forme circulaire et l'organe de fermeture (5) et la paroi (11) adjacente à l'ouverture de sortie (6) ont une forme conique ou tronconique.

8. Soupape selon l'une des revendications précédentes, **caractérisée en ce que** l'aire de la section transversale de la partie distale (9) de la tige est sensiblement égale à l'aire de l'ouverture de sortie (6).
